# EUROPEAN PATENT APPLICATION

(11) **EP 2 953 072 A1**
(43) Date of publication of application: **09.12.2015**
(21) Application number: 15171011.8
(22) Date of filing: 08.06.2015
(51) Int. Cl.: G06Q 10/06

(54) **WORKFLOW TEST CASE GENERATION**

(30) Priority: 06.06.2014 IN CH27792014; 04.06.2015 IN 2779CH2014
(71) Applicant: Accenture Global Services Limited, Dublin 4 (IE)
(72) Inventor: Kaulgud, Vikrant Shyamkant, 411052 Maharashtra (IN); Sriraman, Manisha, 560067 Bangalore (IN); Sharma, Vibhu Saujanya, 560048 PO, Bangalore (IN); Subramanian, Venkatesh, 560037 Bangalore (IN); Maheshwary, Namrata, 560076 Bangalore (IN); Dinakar, Chethana, 560071 Domlur (IN)
(74) Representative: Müller-Boré & Partner Patentanwälte PartG mbB

(57) **Abstract**

Workflow test case generation may include receiving an intermediate output of a workflow. The intermediate output of the workflow may reference a plurality of workflow building blocks that provide a specified functionality at each step of the workflow. Workflow definitions of the intermediate output of the workflow may be analyzed to generate a graph structure that represents the workflow. Building block attributes that include an identification of attributes for the plurality of workflow building blocks, and the graph structure may be analyzed to generate building block and attribute information for the workflow. The building block and attribute information and the graph structure may be analyzed to generate test paths for the workflow. The building block and attribute information, the test paths, and a plurality of test case templates may be analyzed to generate test artifacts that include testing to be performed for the workflow.

## Description

### PRIORITY

This application claims priority to Indian Provisional Patent Application Number: 2779/CHE/2014, filed June 6, 2014, entitled "Automated Generation of Test Cases for Business Process Management Systems", and Indian Non-Provisional Patent Application Number: xxxxxxxxxxxxx, filed June xxx, 2015, entitled "Workflow Test Case Generation", which are incorporated by reference in their entirety.

### BACKGROUND

A workflow may include a plurality of steps needed to complete a task. For example, a workflow may include an orchestrated and repeatable pattern of activity provided by the systematic organization of resources that transform materials, provide services, and/or process information. Workflow management may include management of each step of a workflow, for example, for compliance with workflow requirements, quality standards, etc.

### BRIEF DESCRIPTION OF DRAWINGS

Features of the present disclosure are illustrated by way of examples shown in the following figures. In the following figures, like numerals indicate like elements, in which:
Figure 1 illustrates a detailed architecture of a workflow test case generation system, according to an example of the present disclosure;
Figure 2 illustrates a logic flow of the workflow test case generation system of Figure 1, according to an example of the present disclosure;
Figures 3A-3G illustrate details of pseudo-code related to the logic flow of the workflow test case generation system of Figure 1, according to an example of the present disclosure;
Figure 4 illustrates a workflow, according to an example of the present disclosure;
Figure 5 illustrates a graph structure for the workflow of Figure 4, according to an example of the present disclosure;
Figure 6 illustrates a test path for the workflow of Figure 4, according to an example of the present disclosure;
Figures 7A-7D illustrate pseudo-code related to a workflow building block including a service level agreement (SLA), according to an example of the present disclosure;
Figures 8A-8E illustrate pseudo-code related to a workflow building block including a router, according to an example of the present disclosure;
Figures 9A-9D illustrate pseudo-code related to a workflow building block including a ticket, according to an example of the present disclosure;
Figure 10 illustrates pseudo-code related to a workflow building block including an assignment, according to an example of the present disclosure;
Figure 11 illustrates pseudo-code related to a workflow building block including a utility, according to an example of the present disclosure;
Figure 12 illustrates a test artifact for the workflow of Figure 4, according to an example of the present disclosure
Figure 13 illustrates a method for workflow test case generation, according to an example of the present disclosure;
Figure 14 illustrates further details of the method for workflow test case generation, according to an example of the present disclosure; and
Figure 15 illustrates a computer system, according to an example of the present disclosure.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Workflow management may include the visual definition of workflows as building blocks, where the code-behind the building blocks is not visible. For example, workflow management tools may include a user interface that supports drag and drop creation of a workflow which may be described as placing workflow building blocks on a canvas and connecting the workflow building blocks with arrows. The visually created workflows may then be interpreted and automatically implemented by a workflow implementation tool for a workflow management system that uses the workflow. The workflow implementation tool may implement the backend code that is needed for deployment of a workflow. In this manner, workflows may be created and implemented without the need to write code.

Examples of workflows that may be created and implemented include e-commerce systems such as catalog management systems, shopping carts, order submission systems, etc. For example, a shopping cart may include a workflow, such as add to cart, remove from cart, etc., that may be defined and implemented through the workflow implementation tool. The workflow implementation too! may also include pre-configured workflow building blocks that may be used to create a workflow.

With respect to implementation of such workflows, a quality assurance testing process is needed to determine whether a workflow meets a desired functional and/or design specification. Based on the complexities associated with such workflows, it can be challenging to objectively and efficiently test such workflows.

In order to address the aforementioned aspects related to testing of workflows, a workflow test case generation system and a method for workflow test case generation are disclosed herein. The system and method disclosed herein may provide for the analysis of complex workflows, application of semantics of different workflow building blocks used in a workflow definition, and use of templates to generate a comprehensive set of test artifacts that include test cases for the associated workflow. The test artifacts may be leveraged for high-quality testing of complex workflows, thereby reducing defects and cost of rework related to such workflows.

With respect to analysis of complex workflows, the system and method disclosed herein may provide for the application of test scenarios related to the test artifacts by a test artifact applicator, with the results of the testing being logged and analyzed for compliance by a workflow modifier. Based on the logging and analysis of the testing, the workflow modifier may modify the workflow under consideration for compliance with requirements and/or quality metrics associated with the workflow under consideration.

The workflow test case generation system and the method for workflow test case generation disclosed herein provide a technical solution to technical problems related, for example, to workflow testing. The system and method disclosed herein provide the technical solution of receiving, by a flow extractor that is executed by at least one hardware processor, an intermediate output of a workflow. The intermediate output of the workflow may reference a plurality of workflow building blocks that provide a specified functionality at each step of the workflow. The system and method disclosed herein may further include analyzing, by the flow extractor, workflow definitions of the intermediate output of the workflow to generate a graph structure that represents the workflow. The system and method disclosed herein may further include receiving, by a flow analyzer that is executed by the at least one hardware processor, building block attributes. The building block attributes may include an identification of attributes for the plurality of workflow building blocks. The system and method disclosed herein may further include analyzing, by the flow analyzer, the building block attributes and the graph structure that represents the workflow to generate building block and attribute information for the workflow. The system and method disclosed herein may further include analyzing, by the flow analyzer, the building block and attribute information and the graph structure that represents the workflow to generate test paths for the workflow. The test paths may represent paths and/or lateral branches of the workflow. The system and method disclosed herein may further include analyzing, by a test artifact generator that is executed by the at least one hardware processor, the building block and attribute information, the test paths, and a plurality of test case templates to generate test artifacts that include testing to be performed for the workflows. The system and method disclosed herein may further include applying, by a test artifact applicator that is executed by the at least one hardware processor, the test artifacts to the workflow, and analyzing, by a workflow modifier that is executed by the at least one hardware processor, the application of the test artifacts to the workflow to determine a compliance of the workflow with a predetermined set of compliance requirements. The system and method disclosed herein may further include modifying, by the workflow modifier, the workflow in response to a determination that the workflow is not in compliance with at least one of the predetermined set of compliance requirements.

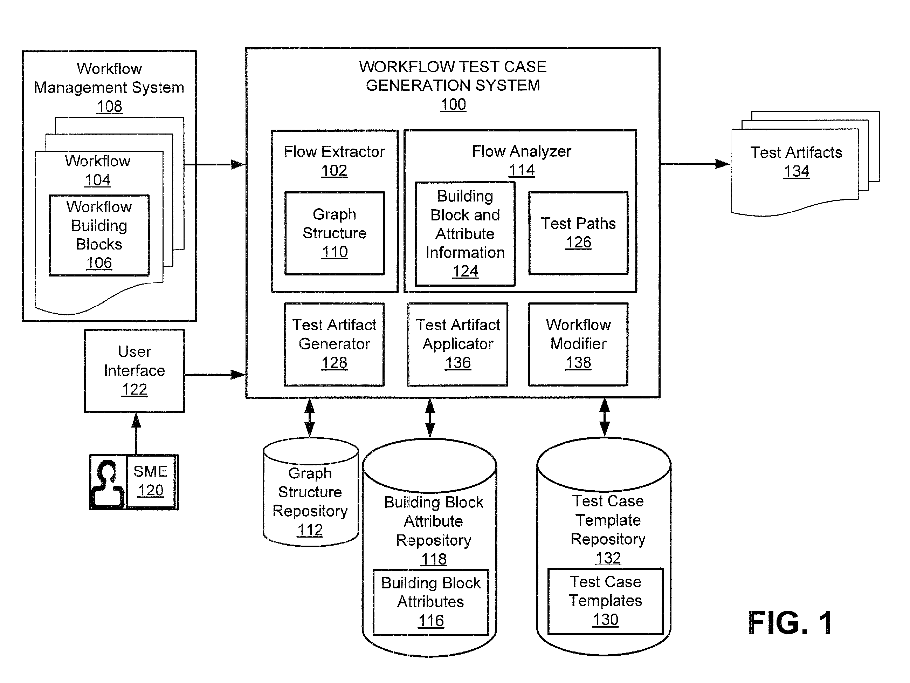

Figure 1 illustrates a detailed architecture of a workflow test case generation system 100, according to an example of the present disclosure. Referring to Figure 1, the system 100 is depicted as including a flow extractor 102 to receive an intermediate output of a workflow 104, for example, in an XML schema format. An intermediate output of the workflow 104 may be described as an XML representation of the workflow 104 based on a workflow management system (e.g., a workflow management system 108 as described herein). Each workflow management system may include a different XML schema format. The output of the workflow 104 may be provided in one or more XML files that reference various workflow building blocks 106 that, within the workflow management system 108, provide the desired functionality at each step of the workflow 104. Each XML file may represent a single workflow building block or a plurality of workflow building blocks. The XML files may also specify the flow and/or relationship between and/or within the various workflow building blocks 106. The XML files may be designated as XML definition files, and include workflow definitions extracted from the workflow management system 108 that implements the workflow 104. A workflow definition may represent elements such as a sequence between workflow building blocks, a logic related to the workflow 104, service level agreements (SLAs), routing, etc.

The flow extractor 102 may analyze the workflow definitions of the XML definition files to generate a graph structure 110. The graph structure 110 may represent the workflow 104. Further, the graph structure 110 may be stored in a graph structure repository 112. The graph structure 110 may use a node and edge format where each node is a workflow building block, and each edge represents the flow between the workflow building block based, for example, on logic and routing. According to an example, the graph structure 110 may be directed, and may not be annotated with additional information.

A flow analyzer 114 may receive building block attributes 116, for example, from a building block attribute repository 118. The building block attributes 116 may characterize a building block. For example, a building block denoted flow action may include attributes such as name, assigned use case, routing details, SLA, etc. The building block attributes 116 may provide for the identification of attributes for various pre-defined building blocks (e.g., pre-defined building blocks that are used to generate the workflow 104) provided by a workflow management tool. For example, the pre-defined building blocks may include SLA, router, ticket, assignment, utility, activity, etc., types of building blocks. In this regard, each of the pre-defined building blocks may represent a unique semantic. Each unique semantic may be used to process the building block and its attributes for generation of test artifacts as described herein. For example, an assignment may create an assignment task associated with a work object in a workbasket or worklist. The task may be completed by a person or a system (e.g., the workflow management system 108) before the workflow 104 can progress further. The assignment may represent a pause or a potential pause in the workflow 104. A ticket may mark an exception that may arise in the workflow 104, such as a cancellation. A utility may specify an activity to run at a given point in the workflow 104 to perform automated processing without any user assignment. The pre-defined building blocks may include various non-workflow concepts such as packaging and inheritances. Packaging may be used to group functionally cohesive flows in the workflow 104. Inheritance may provide for reuse of common flows across a workflow application. According to an example, the building block attributes 116 may be determined by a subject matter expert (SME) 120 based on an understanding of features and associated XML representations of the workflow building blocks 106. The SME 120 may input the building block attributes 116 using a user interface 122. As different industry packages, including their associated building blocks, are installed and used within the workflow management system 108, different building block attributes may be created and made available in the building block attribute repository 118.

The flow analyzer 114 may reference the building block attributes 116 and the graph structure 110, to generate building block and attribute information 124 for the workflow 104 under test. The flow analyzer 114 may reference the building block and attribute information 124 and the graph structure 110 to generate test paths 126 for the workflow 104 under test. A test path may be described as one path in the graph structure 110, and represent a unique flow that may be taken in the workflow 104 based on the logic of the workflow 104. The test paths 126 may represent paths and/or lateral branches in the workflow 104. Branches may represent multiple paths emanating from a node (representing a workflow building block).

A test artifact generator 128 may receive test case templates 130 from a test case template repository 132. The test case templates 130 may be associated with building blocks or sets of building blocks, and define tests that are to be performed for associated building blocks or sets of building blocks (e.g., the workflow building blocks 106). According to an example, the test case templates may specify tests that are to be performed for individual building blocks. According to another example, the test case templates may specify tests that are to be performed for sets or sequences of building blocks within a flow (e.g., the workflow 104). According to an example, the test case templates 130 may be generated by the SME 120 based, for example, on an understanding of the features and associated functionality of the building blocks that are being used in the workflow 104. As different industry packages, including their associated building blocks, are installed and used within the workflow management system 108, different test case templates may be generated and made available in the test case template repository 132.

The test artifact generator 128 may analyze the building block and attribute information, the test paths 126, and the test case templates 130 to generate test artifacts 134 (including test cases) for the workflow 104 under test. The test artifacts 134 may represent documents detailing test scenarios of the workflow 104. In this regard, the test artifact generator 128 may use the test case templates 130 to extract properties of each workflow building block in the workflow 104, and apply heuristics for generating the test artifacts 134. With respect to the application of heuristics for generating the test artifacts 134, heuristics may include identifying the building blocks and associated attributes, and populating the block specific natural language templates based on this extracted data. The test artifact generator 128 may output and/or store the test artifacts 134 in a human readable format (e.g., a textual format), such as in a spreadsheet or word processor document. The test artifact generator 128 may also analyze the semantics of the workflow building blocks 106 to alter the test artifacts 134, and provide contextual information with respect to the test artifacts 134.

A test artifact applicator 136 may apply the test artifacts to the workflow 104 of the workflow management system 108, with the results of the testing being logged and analyzed for compliance by a workflow modifier 138. The application of the test artifacts to the workflow 104 may provide for end to end traceability between requirements for the workflow management system 108 and the test artifacts 134.

Based on the logging and analysis of the testing, and the end to end traceability between requirements for the workflow management system 108 and the test artifacts 134, the workflow modifier 138 may modify the workflow 104 for compliance with the requirements.

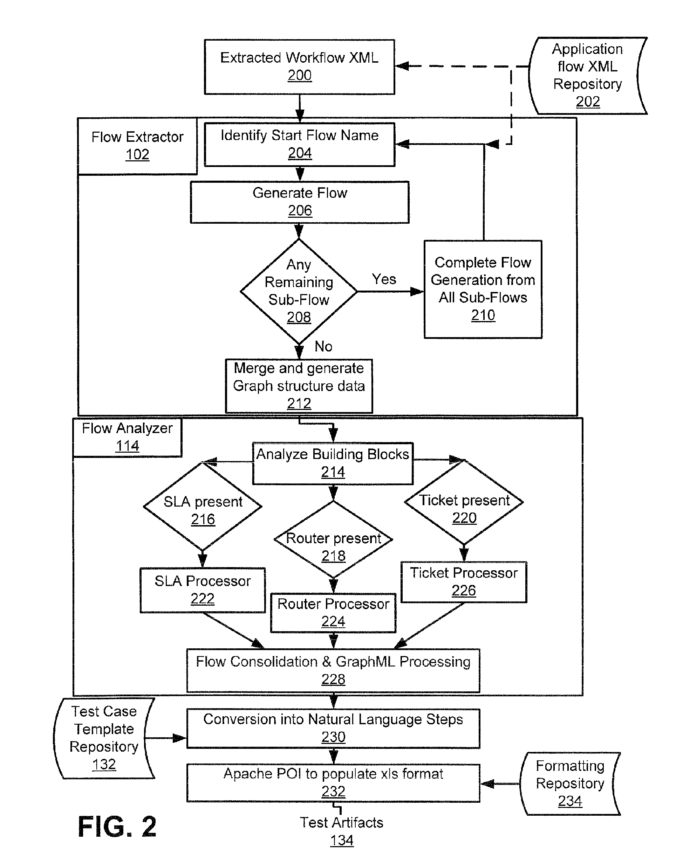

Figure 2 illustrates logic flow of the system 100, according to an example of the present disclosure.

Referring to Figure 2, the flow extractor 102 may receive an extracted intermediate output (i.e., an extracted workflow XML 200) of the workflow 104, for example, in an XML schema format. The extracted workflow XML 200 may be received from an application flow XML repository 202, or otherwise extracted from the workflow 104. In this regard, the extracted intermediate output of the workflow 104 may include the flow information of the associated application or workflow management system 108, the name of the main flow and/or start flow, and the application name.

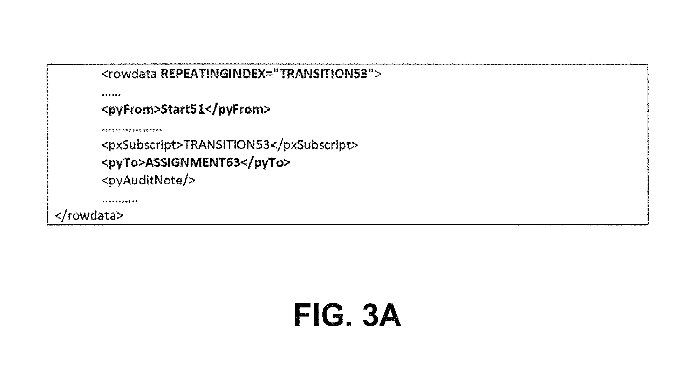

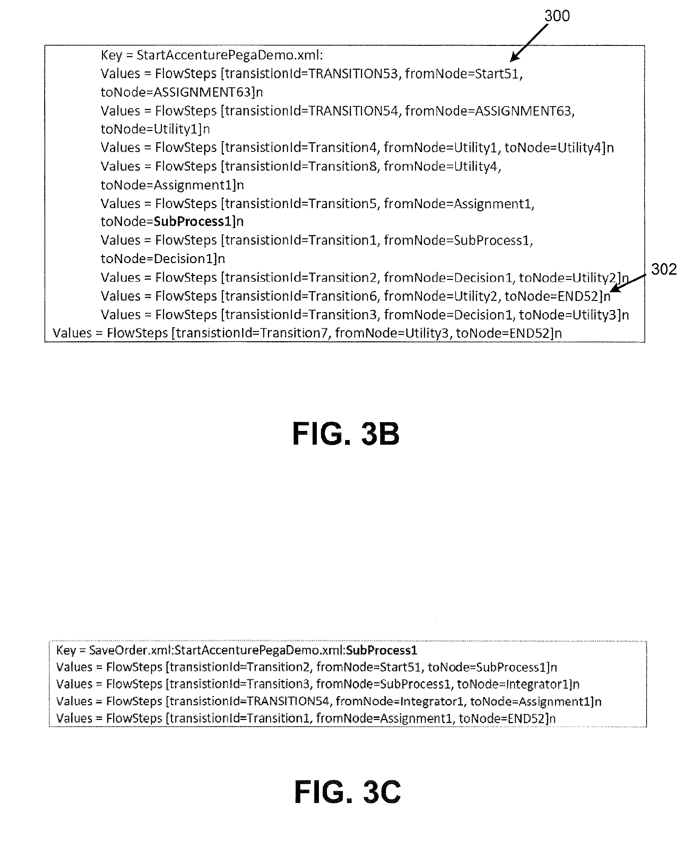

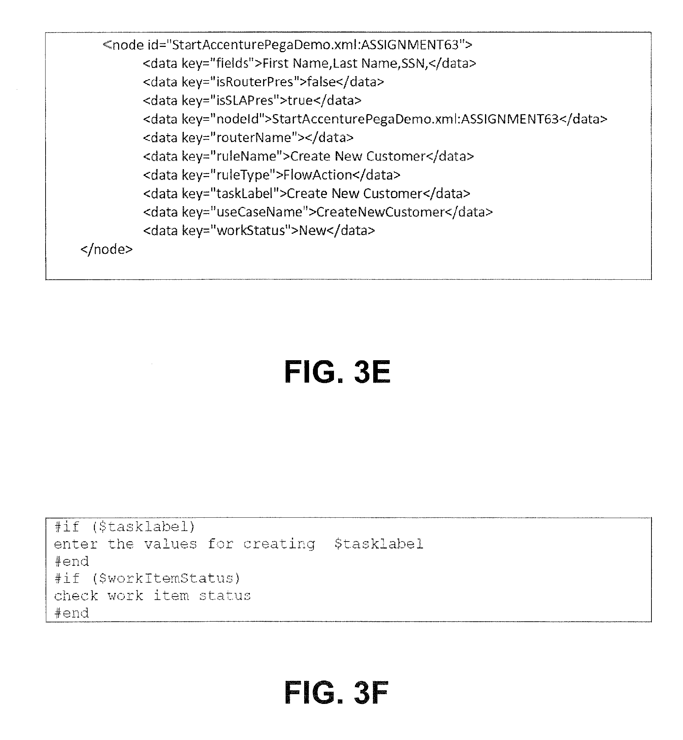

At block 204, the flow extractor 102 may identify a start flow name to generate a flow at block 206. In this regard, the extracted workflow XML 200 and the start flow information may be passed to the flow extractor 102, where the flow extractor 102 may reconstruct the flow by parsing the XML. For example, referring to Figures 3A and 3B, the flow extractor 102 may identify the start node and end node details from the XML using Xpath, where a "pyStartActivity" tag may include the start node detail (e.g., "Start51" at 300) and a "pyEndingActivities" tag may include the end node detail (e.g., "End52" at 302). The node value may be used to obtain the next node detail, where the start node information may be provided to the Xpath "/pagedata/pyModelProcess/pyConnectors/rowdata[pyFrom='Start51']", which may return the output of Figure 3A. The process of using the node value to obtain the next node detail may be repeated until the end node is reached. Further, the start node value may be replaced with the next node detail.

At block 208, the flow extractor 102 may determine whether there are any remaining sub flows.

At block 210, in response to a determination at block 208 that there are remaining sub flows, the flow extractor 102 may complete flow generation from all sub-flows.

At block 212, based on the flow generation at block 206 (that includes all sub-flows identified at block 208), the flow generator may merge the flows, and generate the graph structure 110. The output generated by the flow extractor 102 may include, for example, FromNode and ToNode information. For the example of Figure 3A, Figure 3B illustrates a main flow and Figures 3C illustrates a sub-flow. The main flow may be merged with the sub-flow to generate the graph structure 110 which may include the FromNode and ToNode information. The flow details may be received by the flow analyzer 114, where the flow analyzer 114 may again parse the extracted workflow XML 200 to fetch the remaining information needed to generate the test artifacts 134.

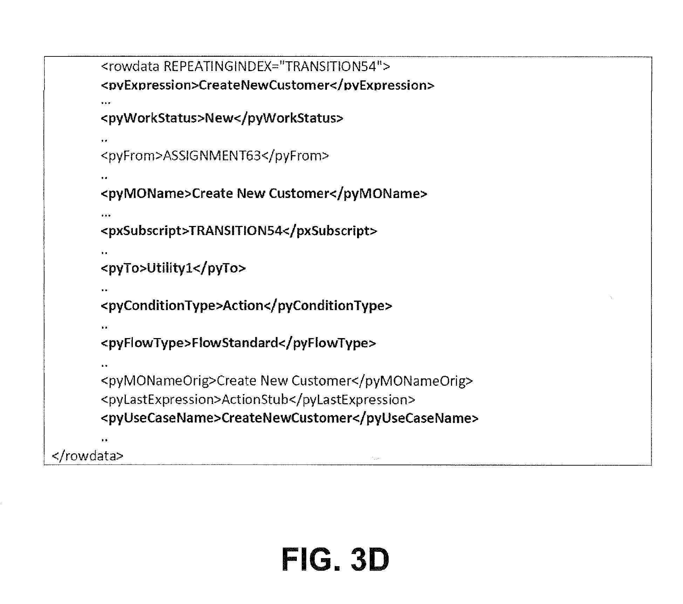

At block 214, the flow analyzer 114 may receive the graph structure 110, and analyze the workflow building blocks 106. In this regard, at blocks 216, 218, and 220, the flow analyzer 114 may respectively determine the type of each of the workflow building blocks 106 (e.g., the presence of a SLA, router, ticket, etc., in each of the workflow building blocks 106). In this regard, a workflow building block may be referred to as a SLA building block, a router building block, etc., or as a building block that includes a SLA, a router, etc. Referring to Figures 3A-3D, Figure 3D illustrates an example of pseudo-code for the flow analyzer 114. Referring to Figures 3C and 3D, for the sub-flow of Figure 3C, "TRANSITION54" is of rule type FlowAction, and may be used to fetch all of the information associated with flow action as shown in Figure 3D.

At blocks 222, 224, and 226, the flow analyzer 114 may respectively process each of the workflow building blocks 106. For the example of Figure 2, the flow analyzer 114 may respectively process the SLA, the router, and the ticket.

At block 228, the flow analyzer 114 may perform flow consolidation and GraphML processing. The output generated by the flow analyzer 114 may include, for example, TestCase.Graphml. Referring to Figures 3A-3E, Figures 3E illustrates a TestCase.Graphml.

At block 230, the test artifact generator 128 may receive the test case templates 130 from the test case template repository 132, to generate the test artifacts 134. In this regard, at block 230, the test artifact generator 128 may convert the test artifacts 134 to natural language steps for testing of the workflow 104. For example, the test artifact generator 128 may read the GraphML, and use, for example, a velocity Template application programming interface (API) to describe the flows and constraints in natural language. The test artifact generator 128 may read the GraphML by providing the start node and end node details. A different template may be used based on a rule type. For example, referring to Figure 3F, a FlowAction rule type template is illustrated.

At block 232, the test artifact generator 128 may use Apache POI API to populate, for example, an XLS (e.g., Excel Spreadsheet) format test artifact, based on input from a formatting repository 234.

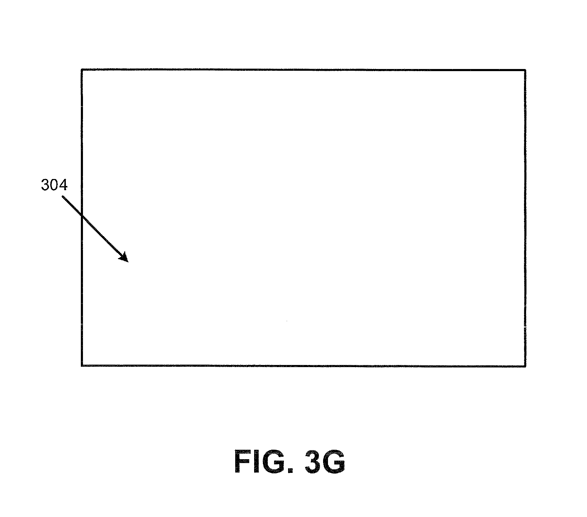

With respect to operation of the test artifact applicator 136 and the workflow modifier 138, referring to Figure 3G, from the GraphML, all of the possible paths that may be taken in the workflow 104 may be identified based on logic, for example, by using a third party API. The start node and end node details which are captured from the XML using the Xpath may also be forwarded to the third party API. From each node of the graph structure 110 (representing the workflow building blocks 106), the type (i.e., ruletype) may be identified as shown in Figure 3G. Referring to Figure 3G, the type (i.e., ruletype) is denoted at 304. Based on the type and section (column names in XLS (i.e., Unit Test Case/Steps to Execute/Expected Result)) the corresponding template may be extracted and loaded, and converted into natural language. For example, if the type is Flowaction and Section is UnittestCase, then the template loaded is \\TemplateRepository\\stFiowTemplates\\ flowActionUnitTestTemplate.vm.

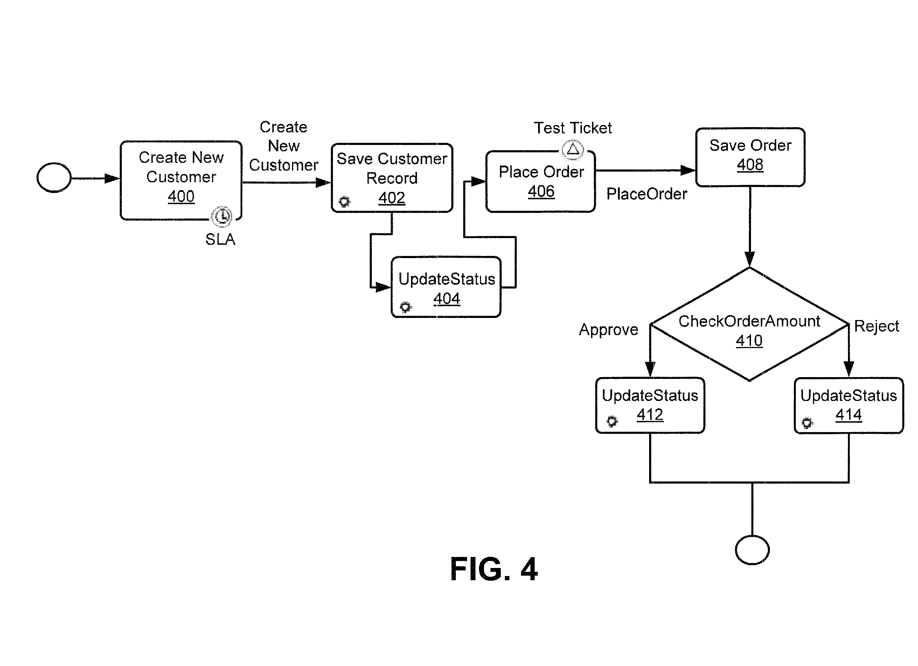

Figure 4 illustrates a workflow, according to an example of the present disclosure.

Referring to Figure 4, at block 400, a new customer may be created. At block 402, the customer record may be saved. At block 404, a status of the customer may be updated. At block 406, an order may be placed. At block 408, the order related to the order placed at 406 may be saved. At block 410, an amount of the order may be checked. At block 412, in response to a determination that the amount of the order is correct, the order may be approved, and the customer status may be updated. Further, at block 414, in response to a determination that the amount of the order is incorrect, the order may be rejected, and the customer status may be updated.

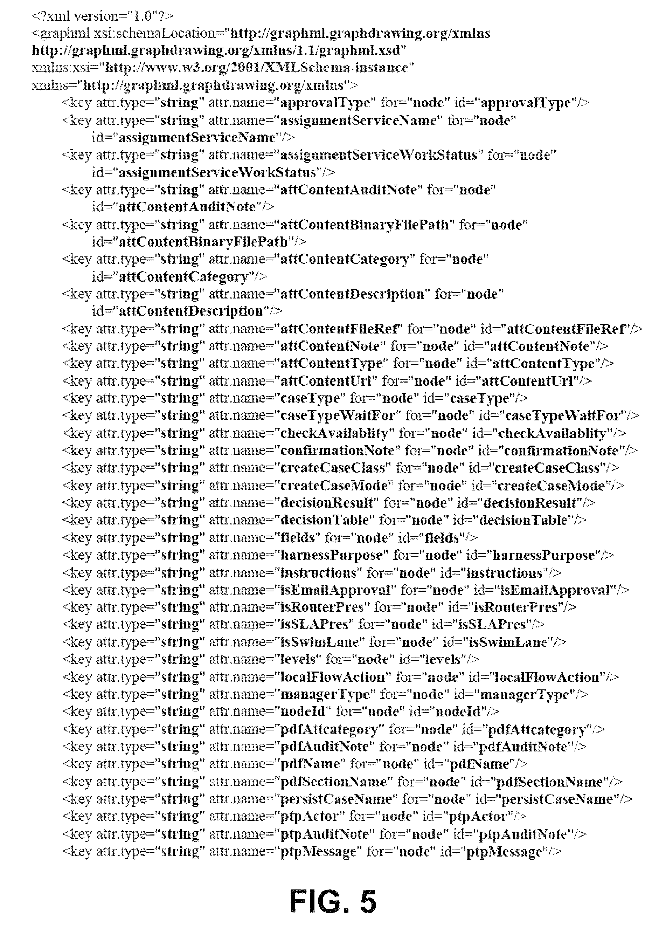

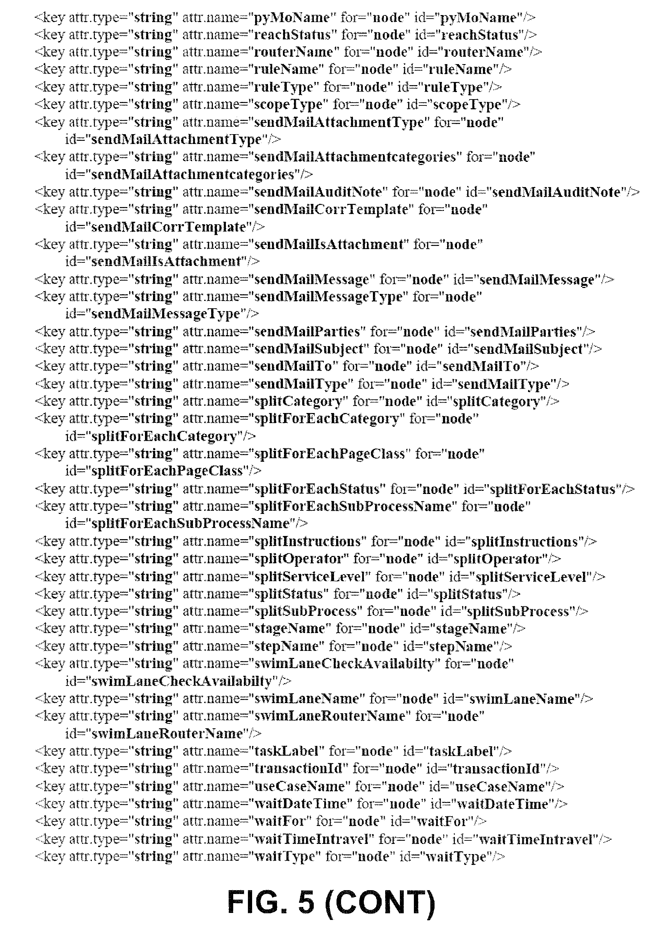

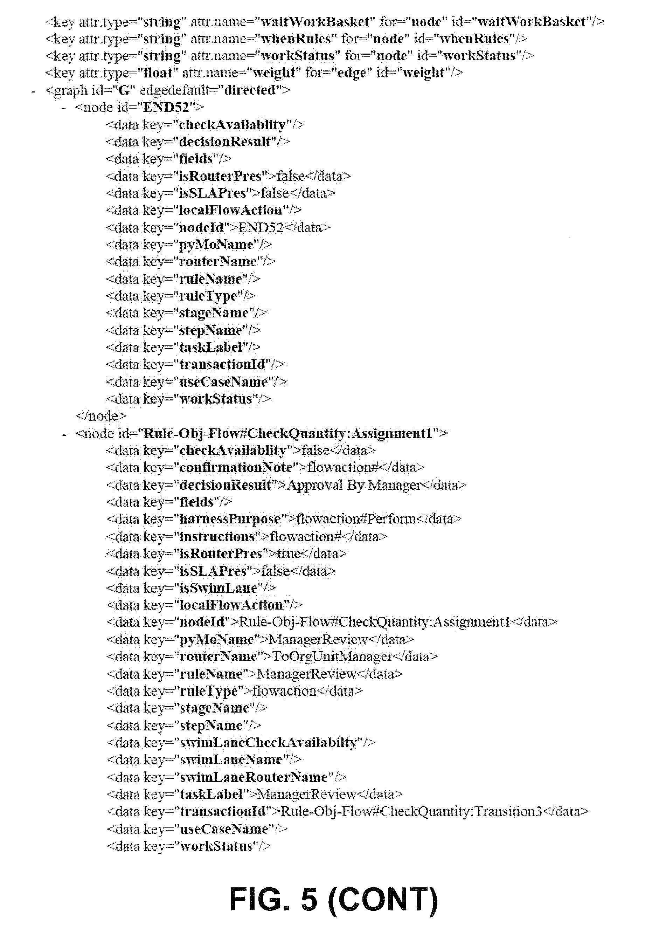

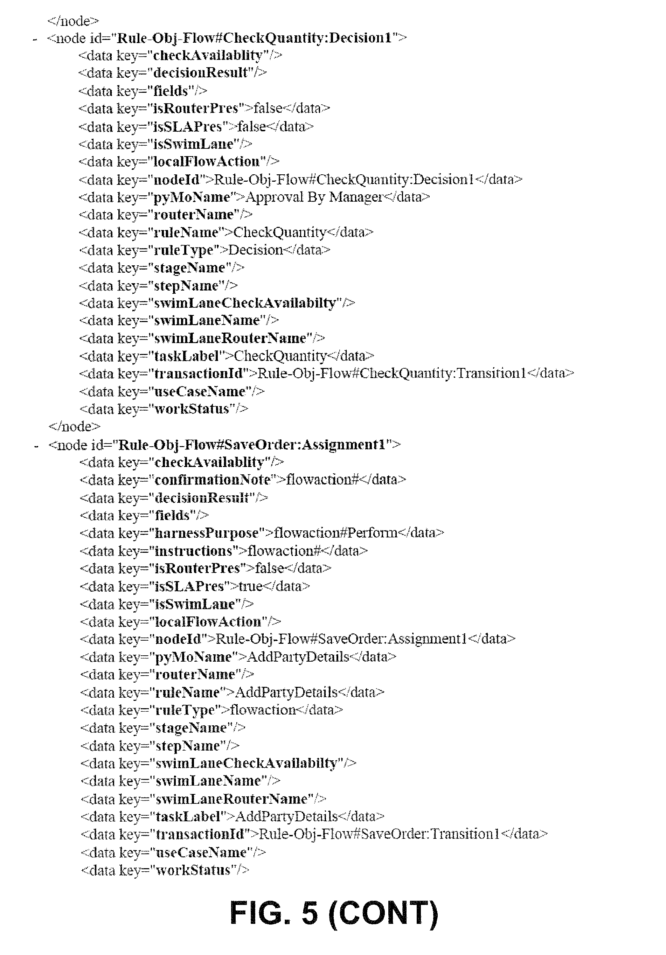

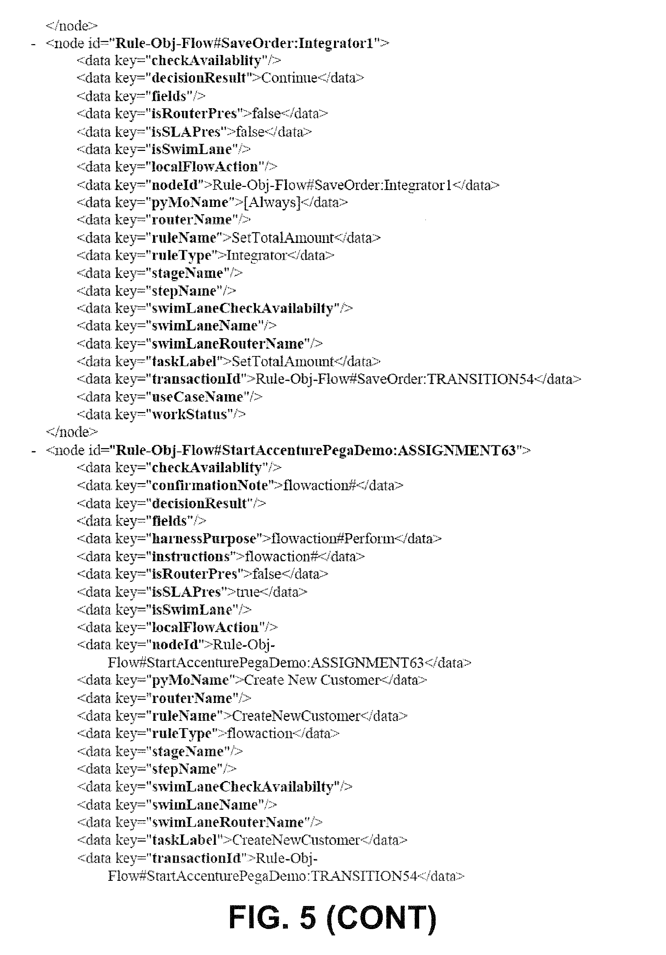

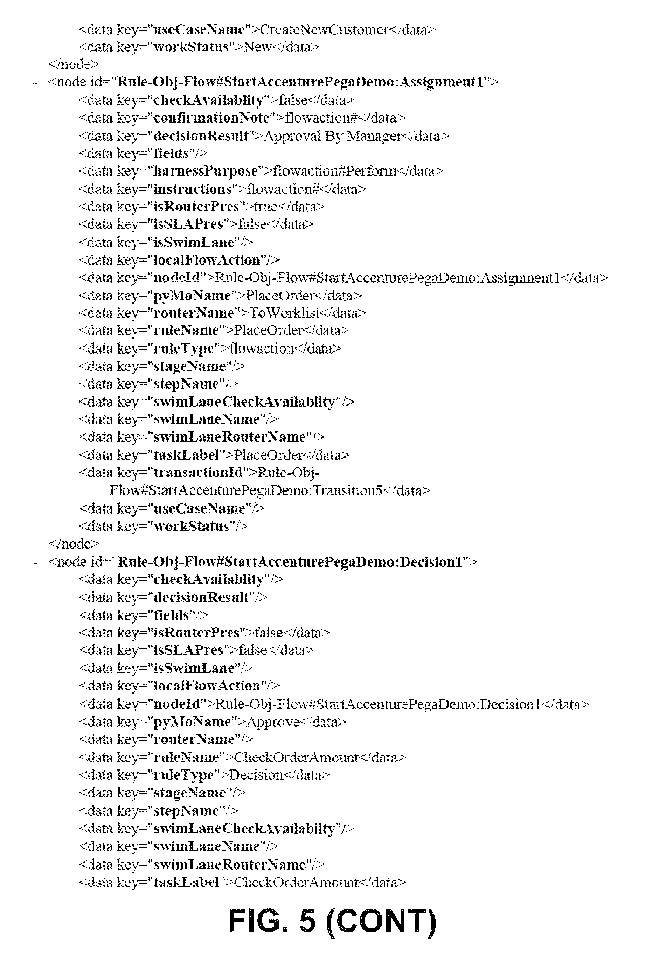

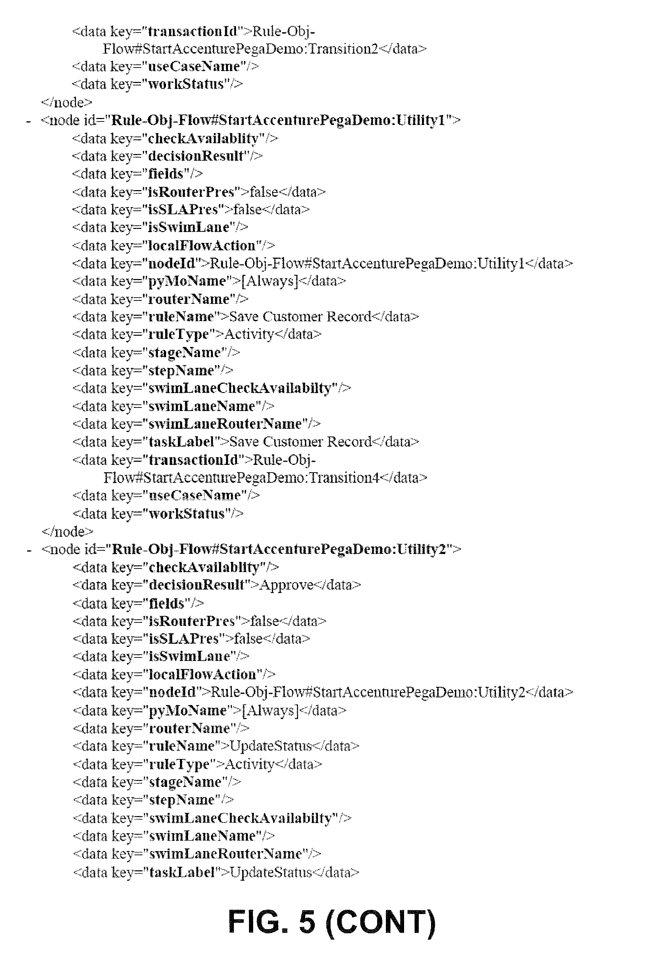

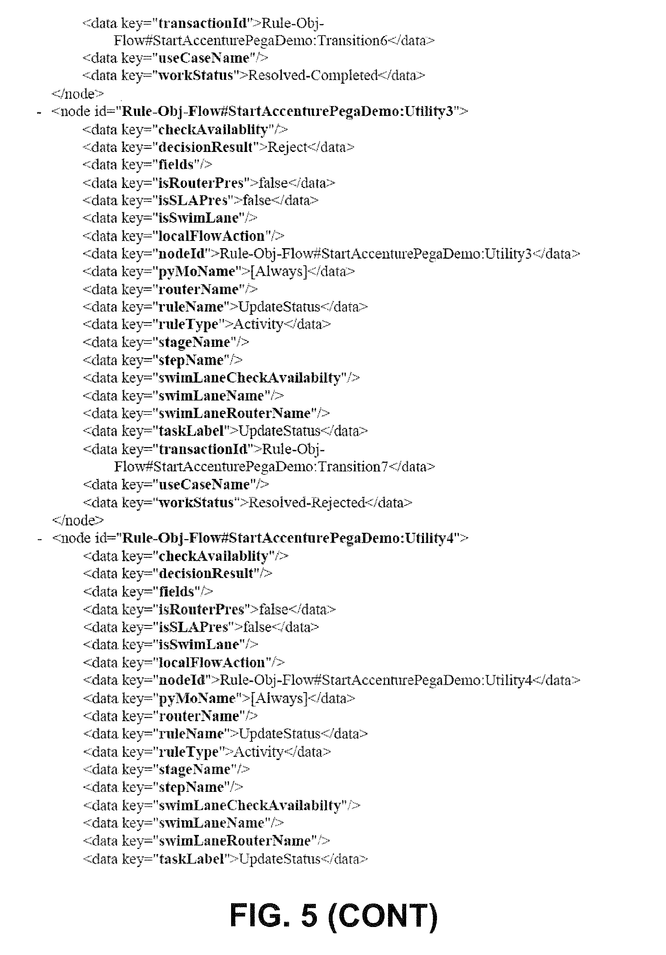

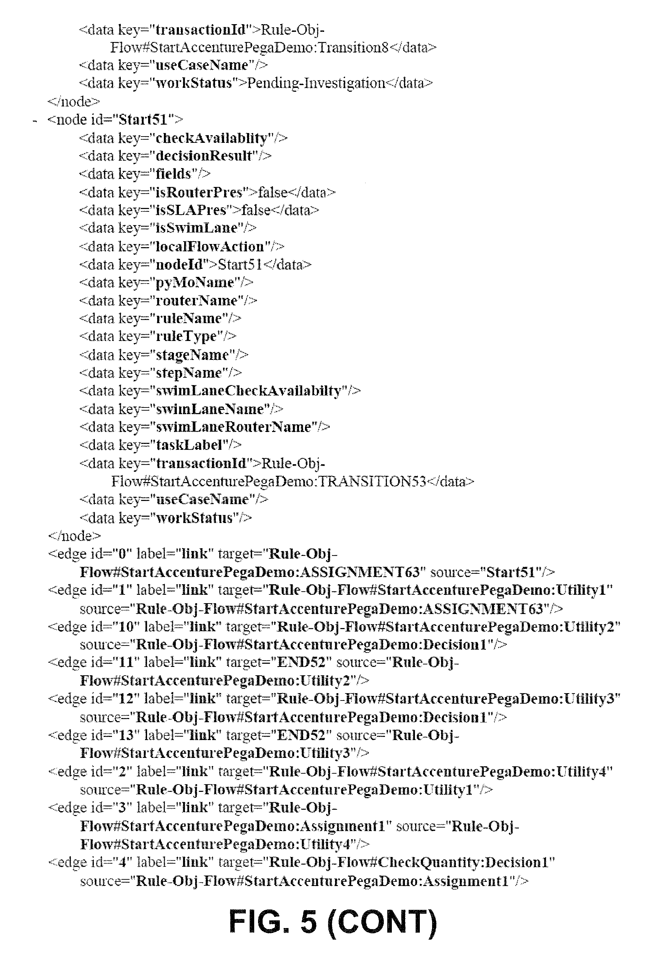

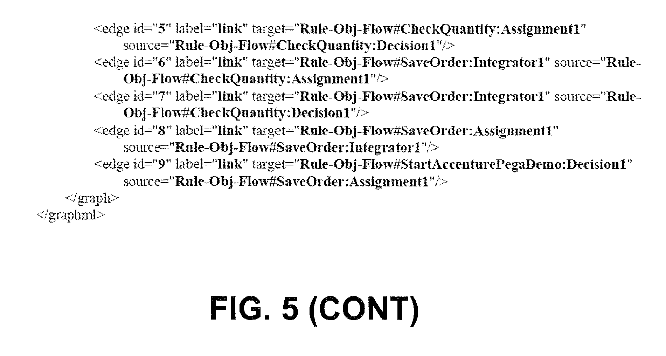

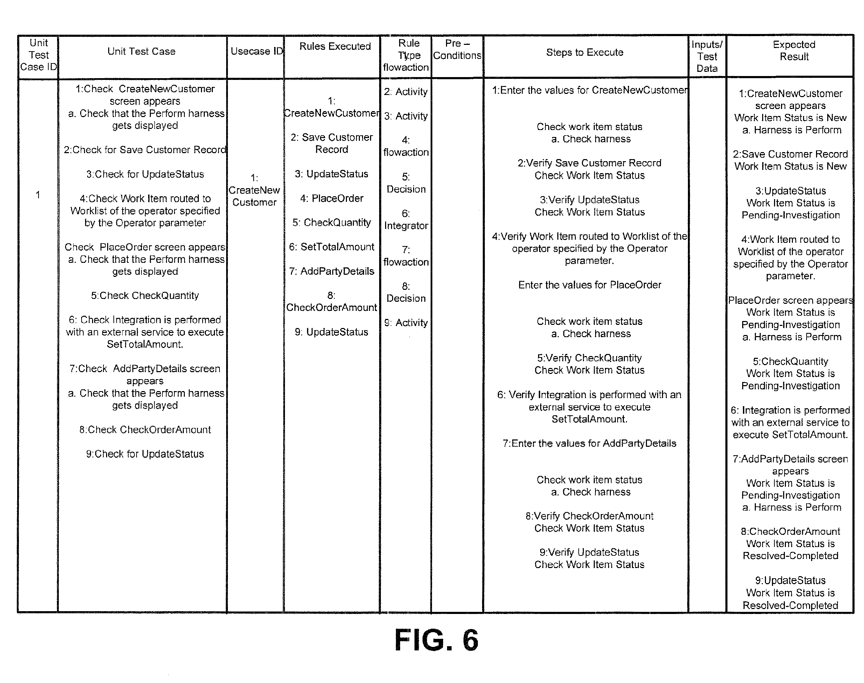

Referring to Figures 2, 4, and 5, Figure 5 illustrates a graph structure 110 generated by the flow extractor 102 for the example of Figure 4. Further, Figure 6 illustrates one of four test paths generated by the flow analyzer 114 for the example of Figure 4.

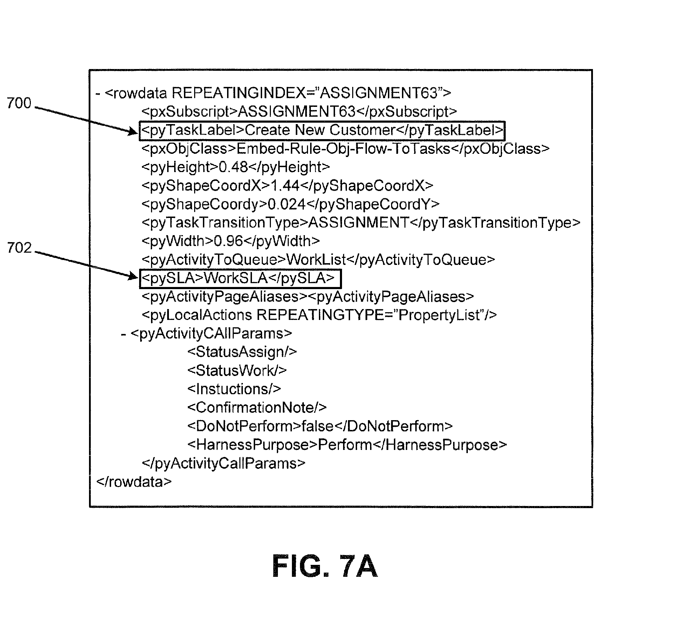

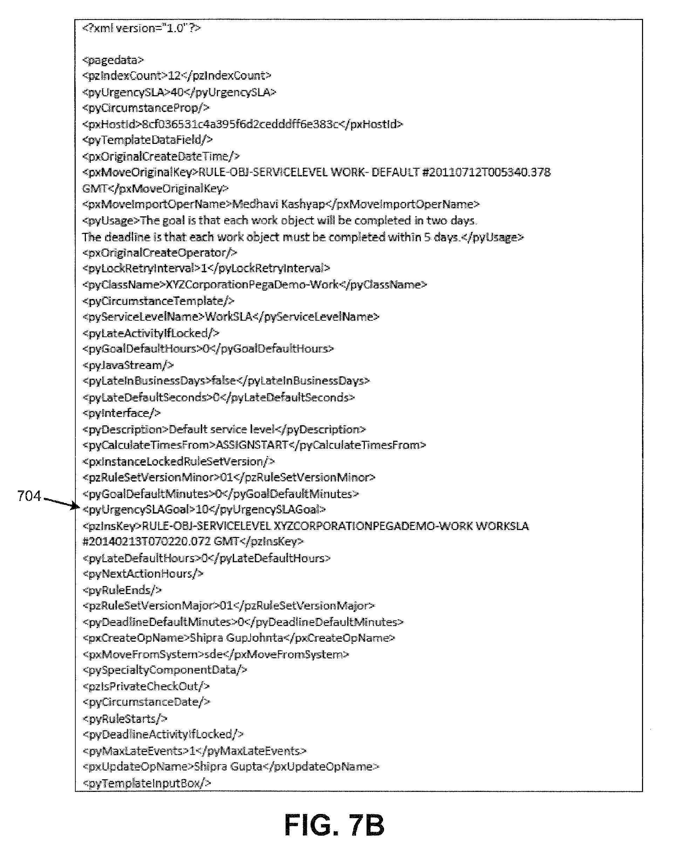

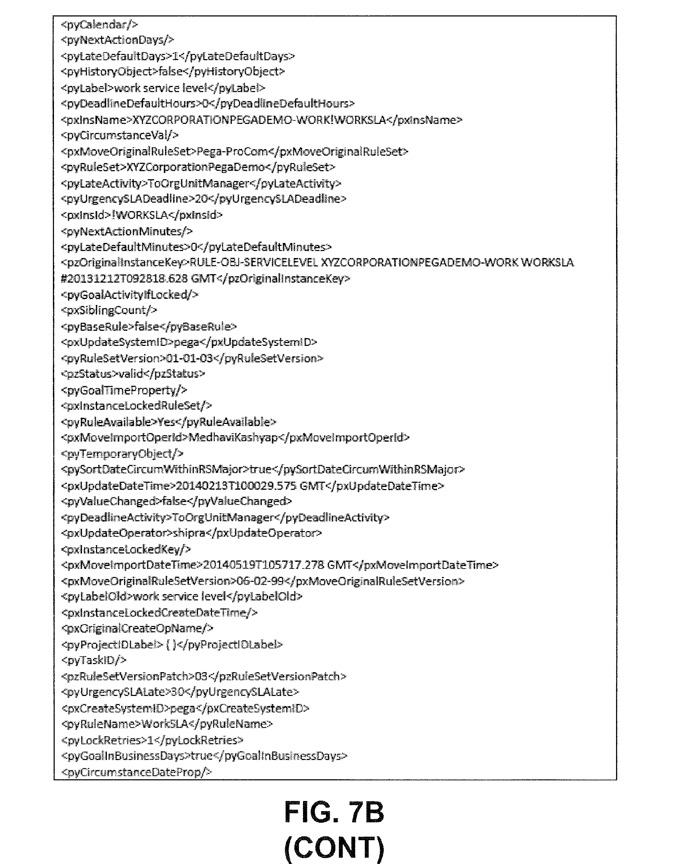

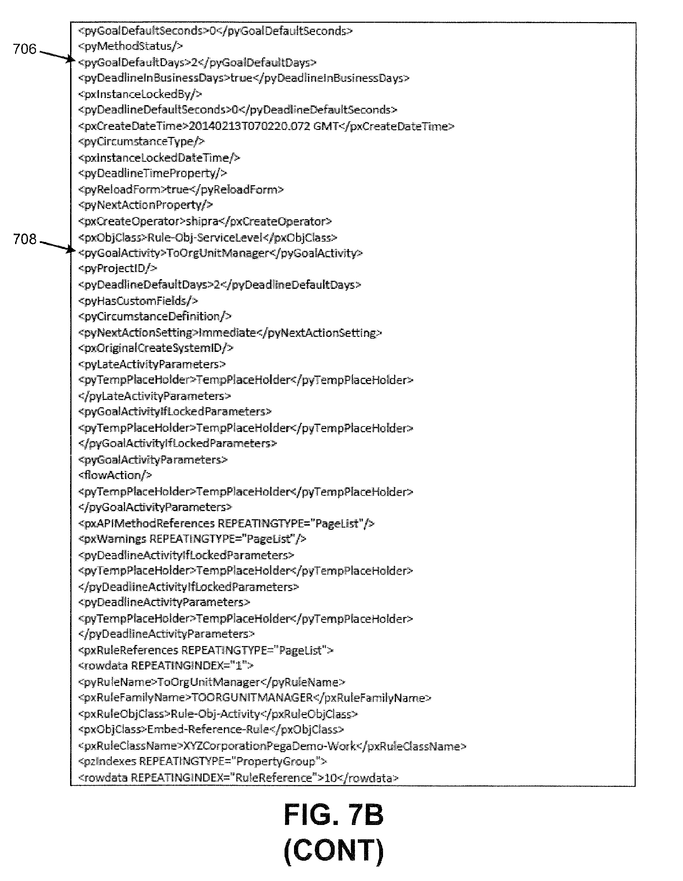

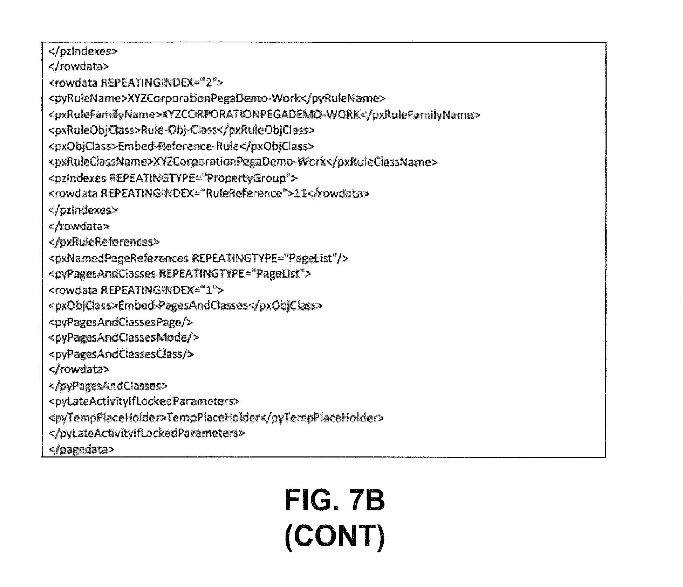

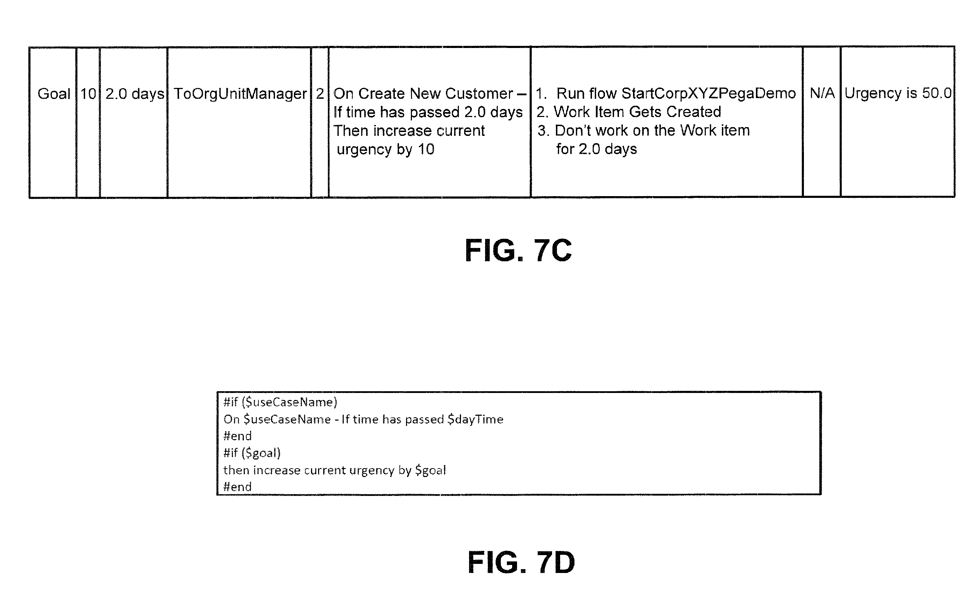

Referring to Figures 1, 2, 4, and 7A-7D, the flow analyzer 114 may respectively determine the type of each of the workflow building blocks 106 (e.g., the presence of a SLA, router, ticket, etc., in each of the workflow building blocks 106). For example, the block at 400 may include a SLA (or be designated as a SLA). In this regard, with respect to the SLA processor 222, the SLA tab may include the test scripts for SLA. In order to determine (e.g., at block 214) whether a SLA is present or not in the block 400, the pseudo-code for determining whether a SLA is present or not is illustrated in Figure 7A, for example, at 700 and 702 (e.g., *lpagedatalpyTaskInfo*/*rowdata[@REPEATINGINDEX="{0}*/*pySLA*)*.* The "pySLA" tag may indicate whether a SLA is present, and a name of the SLA file. The SLA processor 222 may process the SLA file (i.e., WorkSLA.xml). Figure 7B illustrates an example of a SLA file. For the SLA file of Figure 7B, service level standard goal tags are identified at 704, 706, and 708. Using the same process data related to "Deadline", "passedDeadline" may be retrieved. The SLA processor 222 may process all of the data related to the SLA, where the processed data may be written to a graph format (e.g., "output\StartXYZCorporationPegaDemo_SLA_filename.xml"). At block 228, the graph file may be parsed, for example, by using a Gremlin framework. Further, at block 230, the data may be converted into a natural language, for example, by using a velocity template (e.g., "TemplateRepository\sla"). In this regard, Figures 7C and 7D respectively illustrate test scripts and a template for the SLA.

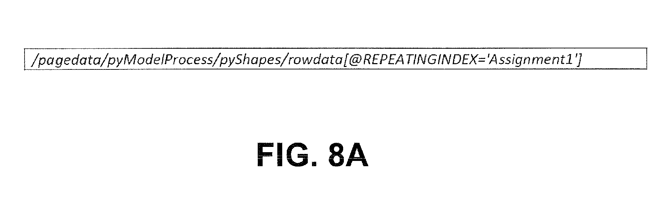

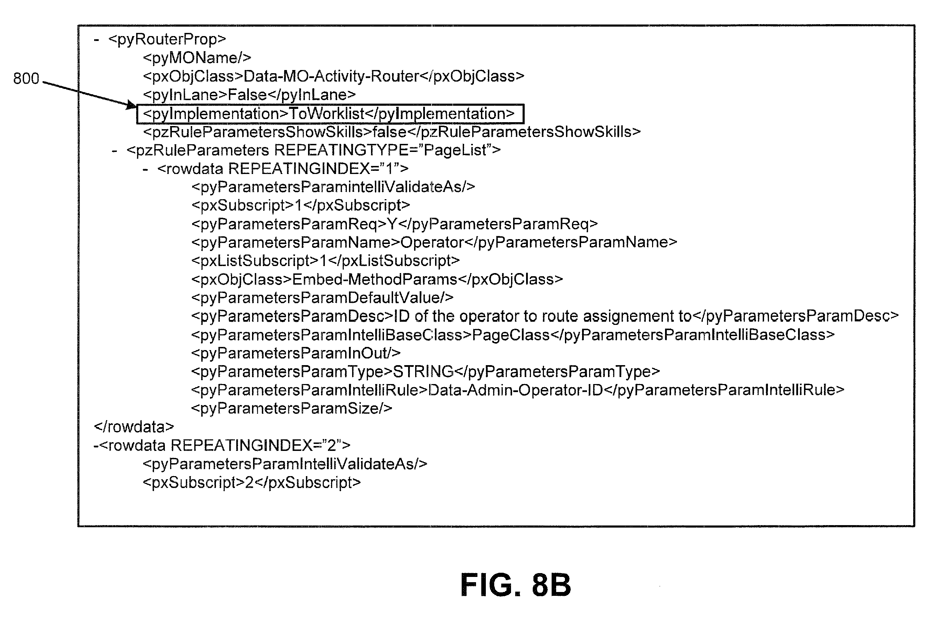

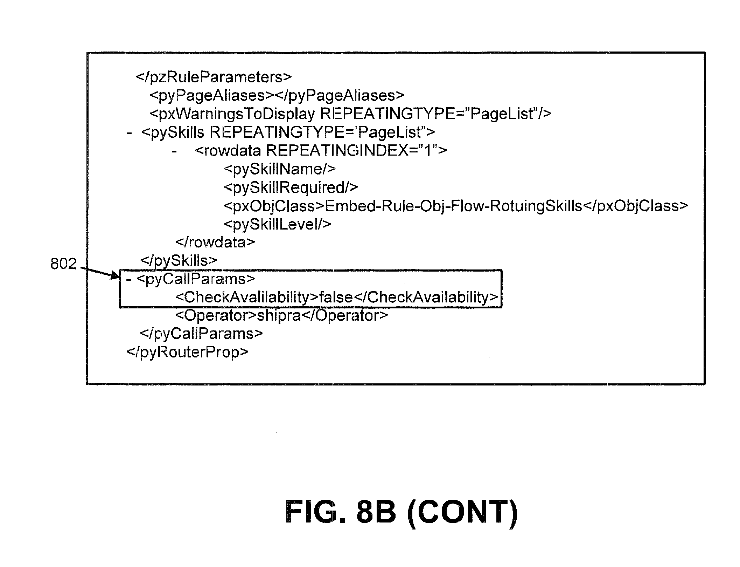

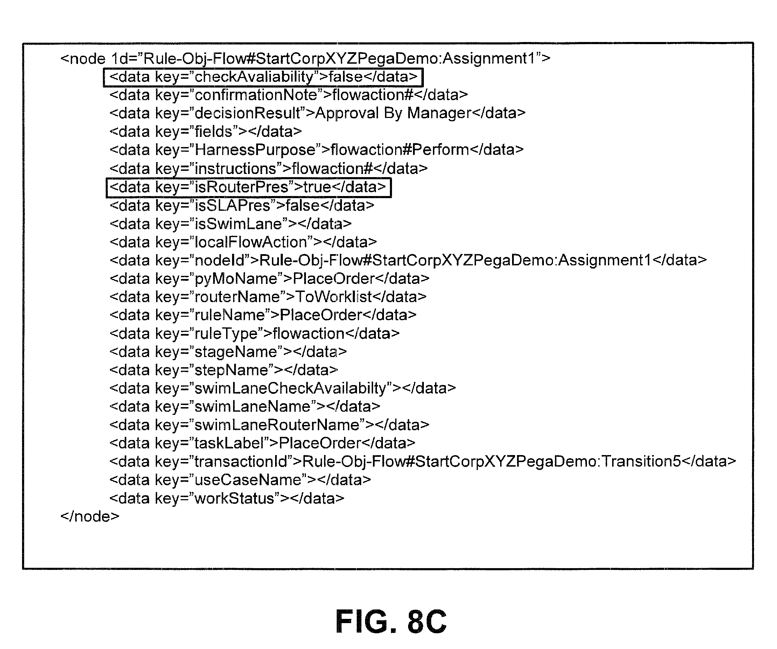

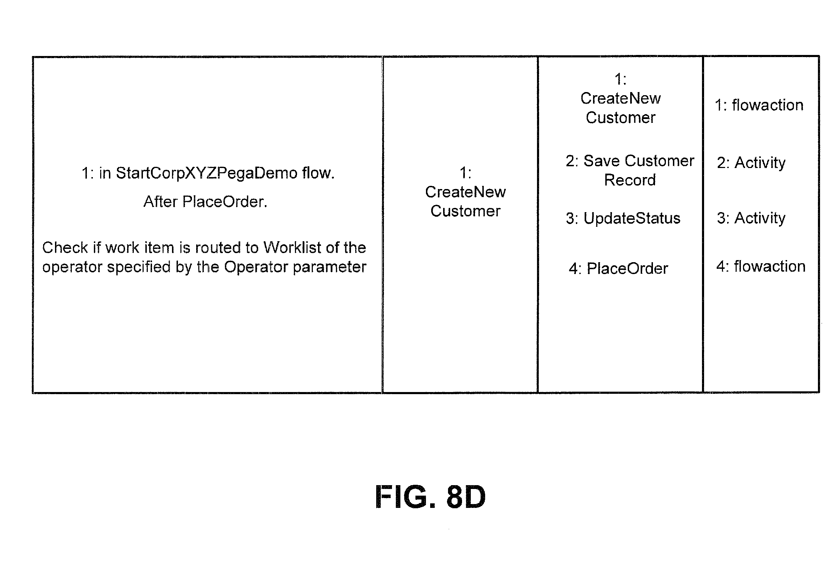

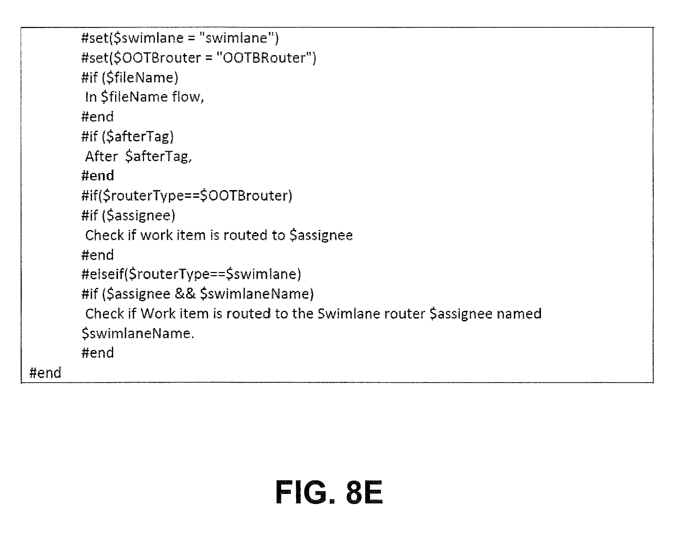

Referring to Figures 1, 2, 4, and 8A-8E, with respect to the router processor 224, the router tab may include the test scripts for router. In this regard, at block 218, the flow analyzer 114 may determine whether a router is present, for example, by executing the Xpath of Figure 8A against the input XML (i.e., the extracted workflow XML 200). Referring to Figure 8B, at 800, the "pylmplementation" tag indicates where it is routed to, and at 802, "checkAvailablity" indicates whether it is routed to as a secondary operator if the primary operator is not available. Data related to the router may be extracted, and written into a graph format (e.g., "output\ StartXYZCorporationPegaDemo_FLOW_filename.xml"). Figure 8C illustrates a GraphML node with router data. Further, at block 230, the data may be converted into a natural language, for example, by using a velocity template (e.g., "TemplateRepository\router"). In this regard, Figures 8D and 8E respectively illustrate test scripts and a template for the router.

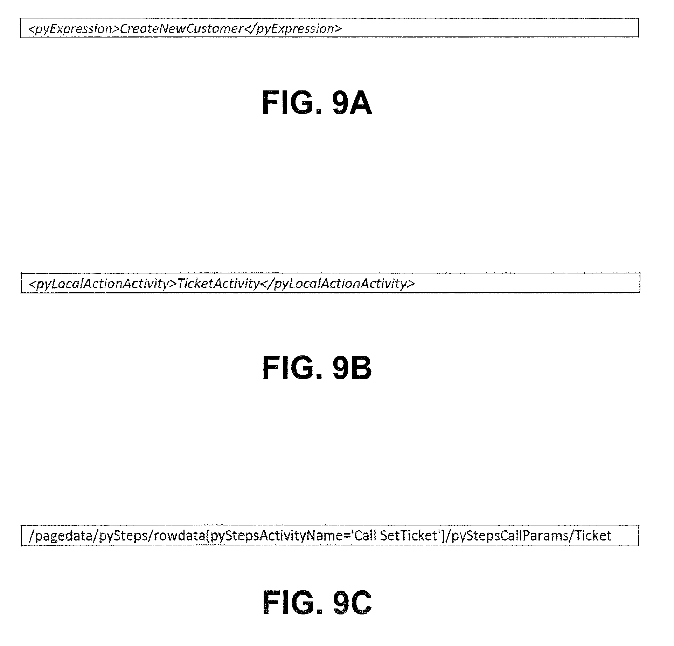

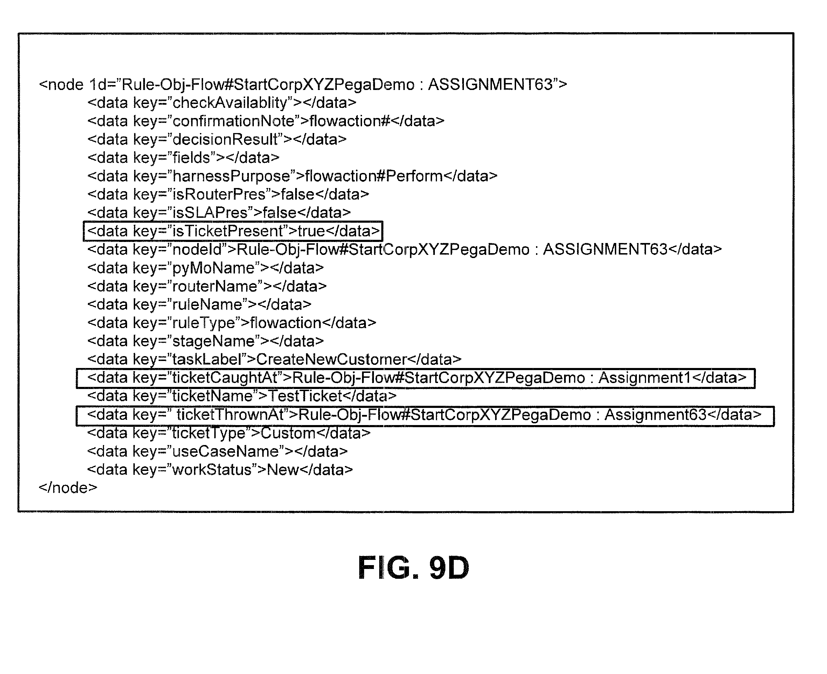

Referring to Figures 1, 2, 4, and 9A-9D, with respect to throwing of a ticket, at block 220, the flow analyzer 114 may determine whether a ticket is present. Referring to Figure 9A, the flow analyzer 114 may identify the name of the block by using, for example, "/pagedata/pyModelProcess/pyConnectors/rowdata[pyFrom='ASSIGNMENT63'] ". Referring to Figure 9B, the flow analyzer 114 may parse the XML, and identify all the activity defined in the block (e.g., "/pagedata/pyLocalActionActivity[text()]"). The flow analyzer 114 may process the activity XML, and check for rule name 'SetTicket'. Referring to Figure 9C, the flow analyzer 114 may get the ticket name (i.e., TestTicket). With respect to catching of a ticket that is thrown, the flow analyzer 114 may check for the block which catches the ticket that is thrown (e.g., with respect to Figure 9C). All of the information related to tickets may be written in a graph format (e.g., "StartXYZCorporationPegaDemo_Ticket_filename.xml"). Referring to Figure 9D, a sample graph node including ticket data is illustrated. Further, at block 230, the data may be converted into a natural language, for example, by using a velocity template (e.g., "TemplateRepository\ticketTemplates").

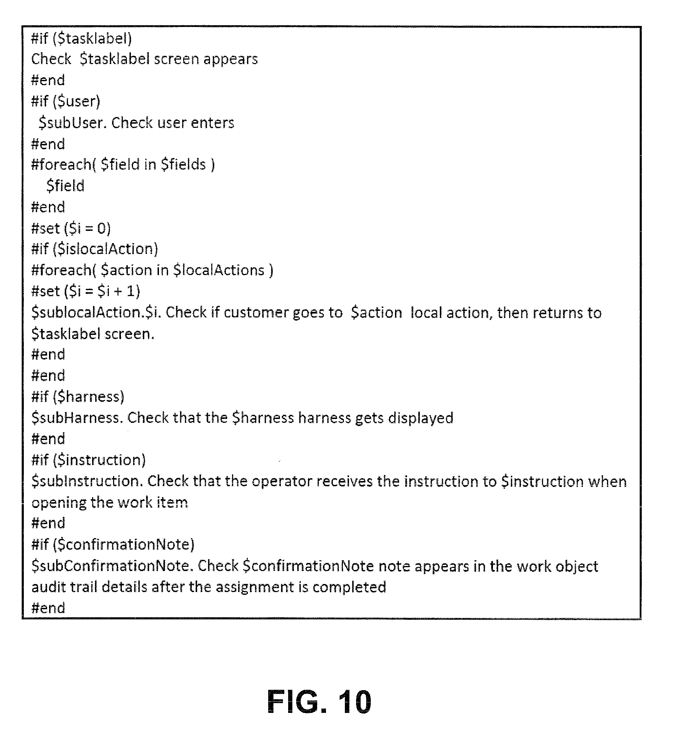

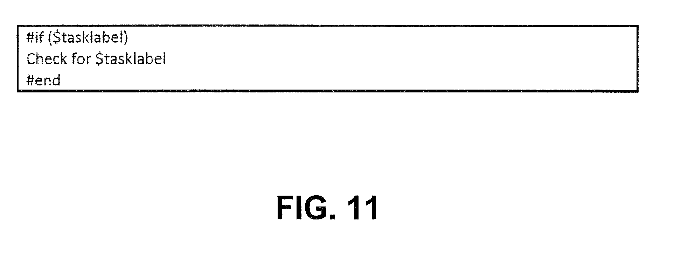

According to further examples of building blocks and related templates, Figure 10 illustrates pseudo-code for a template related to a workflow building block including an assignment, according to an example of the present disclosure. Further, Figure 11 illustrates pseudo-code for a template related to a workflow building block including a utility, according to an example of the present disclosure.

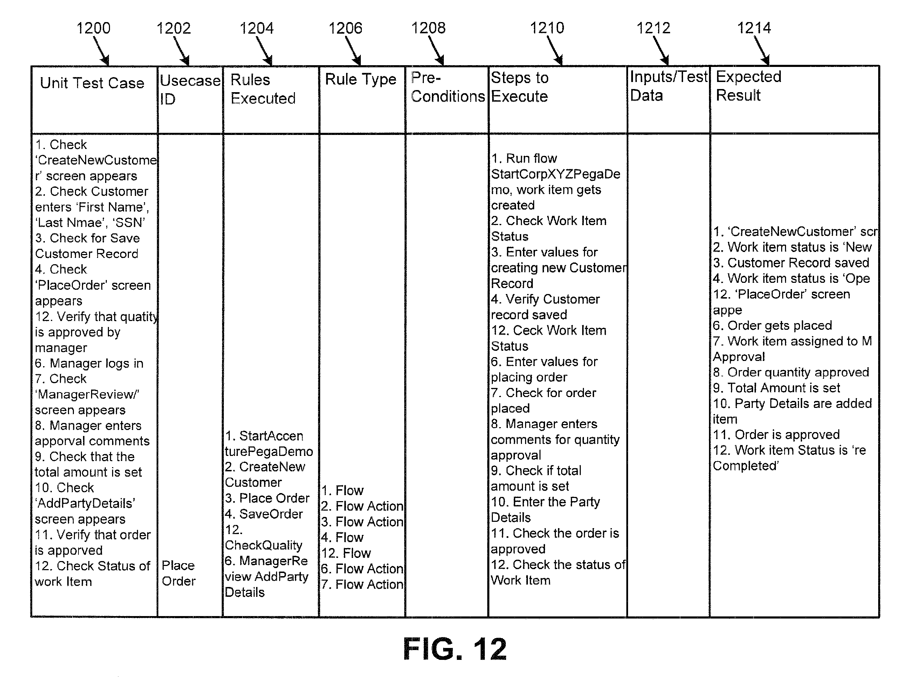

Figure 12 illustrates a test artifact for the workflow of Figure 4, according to an example of the present disclosure.

Referring to Figure 12, the test artifact 134 for the workflow of Figure 4 may include unit test case information at 1200, use-case identification at 1202, rules that are executed for the test artifact 134 at 1204, rule types at 1206, pre-conditions at 1208, steps that are to be executed for the test artifact 134 at 1210, inputs/test data at 1212, and expected results for the corresponding unit test cases and steps to execute at 1214.

The elements of the system 100 may be used with different workflow management systems, and with different sets of preconfigured building blocks or industry packs. The elements of the system 100 may be configured for different uses by providing as inputs different test case templates and different workflow management system building block attributes. Thus, the system 100 may extensible to accommodate new workflow building blocks and/or changes to semantics and/or attributes of existing workflow building blocks.

The elements of the system 100 described herein may be machine readable instructions stored on a non-transitory computer readable medium. In addition, or alternatively, the elements of the workflow test case generation system 100 may be hardware or a combination of machine readable instructions and hardware.

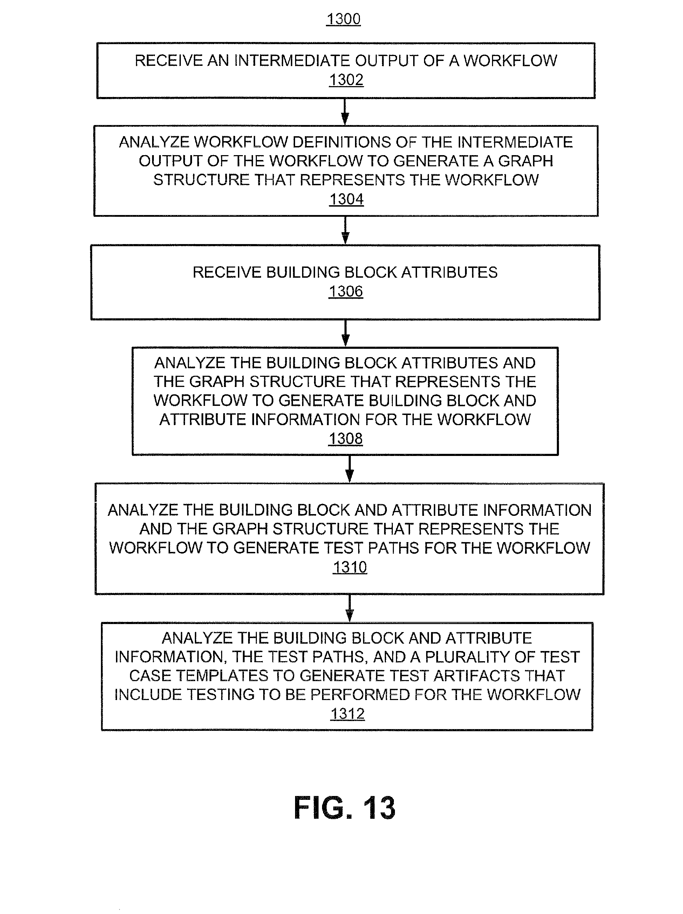

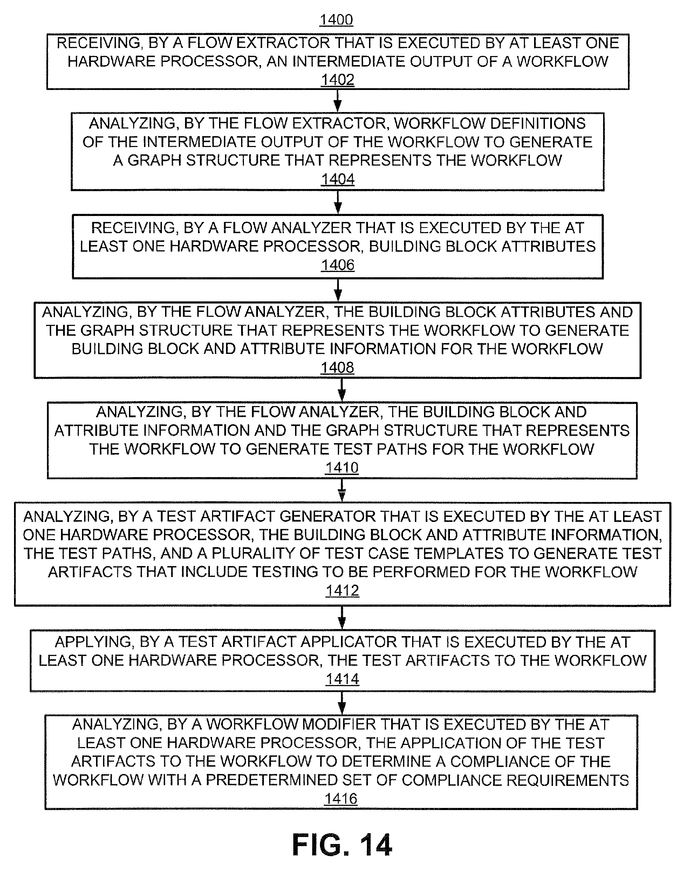

Figures 13 and 14 illustrate flowcharts of methods 1300 and 1400 for workflow test case generation, according to examples. The methods 1300 and 1400 may be implemented on the workflow test case generation system 100 described above with reference to Figures 1-12 by way of example and not limitation. The methods 1300 and 1400 may be practiced in other systems.

Referring to Figure 1 and 13, at block 1302, the method 1300 may include receiving an intermediate output of a workflow 104. The intermediate output of the workflow 104 may reference a plurality of workflow building blocks 106 that provide a specified functionality at each step of the workflow 104.

At block 1304, the method 1300 may include analyzing workflow definitions of the intermediate output of the workflow 104 to generate a graph structure 110 that represents the workflow 104.

At block 1306, the method 1300 may include receiving building block attributes 116, where the building block attributes 116 may include an identification of attributes for the plurality of workflow building blocks 106.

At block 1308, the method 1300 may include analyzing the building block attributes 116 and the graph structure 110 that represents the workflow 104 to generate building block and attribute information 124 for the workflow 104.

At block 1310, the method 1300 may include analyzing the building block and attribute information 124 and the graph structure 110 that represents the workflow 104 to generate test paths 126 for the workflow 104, where the test paths 126 may represent paths and/or lateral branches of the workflow 104.

At block 1312, the method 1300 may include analyzing the building block and attribute information 124, the test paths 126, and a plurality of test case templates 130 to generate test artifacts 134 that include testing to be performed for the workflow 104.

According to an example, the intermediate output of the workflow 104 may include an XML schema format.

According to an example, the intermediate output of the workflow 104 may include a XML file that represents a single workflow building block of the plurality of workflow building blocks 106, or the plurality of workflow building blocks 106.

According to an example, a workflow building block of the plurality of workflow building blocks 106 may include a SLA, a router, a ticket, an assignment, a utility, or an activity.

According to an example, the test case templates 130 may be associated with building blocks or sets of building blocks, where the test case templates 130 define tests that are to be performed for the associated building blocks or the sets of building blocks.

According to an example, the method 1300 may include analyzing the building block and attribute information 124, the test paths 126, and a plurality of test case templates 130 to generate test artifacts 134 that include testing to be performed for the workflow 104 by using the test case templates 130 to extract properties of each workflow building block of the plurality of workflow building blocks 106, and applying heuristics to generate the test artifacts 134.

According to an example, the method 1300 may include applying the test artifacts 134 to the workflow 104, and analyzing the application of the test artifacts 134 to the workflow 104 to determine a compliance of the workflow 104 with a predetermined set of compliance requirements.

According to an example, the method 1300 may include modifying the workflow 104 in response to a determination that the workflow 104 is not in compliance with at least one of the predetermined set of compliance requirements.

According to an example, the method 1300 may include generating the graph structure 110 that represents the workflow 104 by identifying start node and end node details from the intermediate output of the workflow 104.

According to an example, the method 1300 may include generating the graph structure 110 that represents the workflow 104 by merging main and sub-flows of the intermediate output of the workflow 104.

Referring to Figure 1 and 14, at block 1402, the method 1400 may include receiving, by a flow extractor 102 that is executed by at least one hardware processor (e.g., the hardware processor 1502), an intermediate output of a workflow 104. The intermediate output of the workflow 104 may reference a plurality of workflow building blocks 106 that provide a specified functionality at each step of the workflow 104.

At block 1404, the method 1400 may include analyzing, by the flow extractor 102, workflow definitions of the intermediate output of the workflow 104 to generate a graph structure 110 that represents the workflow 104.

At block 1406, the method 1400 may include receiving, by a flow analyzer 114 that is executed by the at least one hardware processor, building block attributes 116, where the building block attributes 116 may include an identification of attributes for the plurality of workflow building blocks 106.

At block 1408, the method 1400 may include analyzing, by the flow analyzer 114, the building block attributes 116 and the graph structure 110 that represents the workflow to generate building block and attribute information 124 for the workflow 104.

At block 1410, the method 1400 may include analyzing, by the flow analyzer 114, the building block and attribute information 124 and the graph structure 110 that represents the workflow 104 to generate test paths 126 for the workflow 104, where the test paths 126 may represent paths and/or lateral branches of the workflow 104.

At block 1412, the method 1400 may include analyzing, by a test artifact generator 128 that is executed by the at least one hardware processor, the building block and attribute information 124, the test paths 126, and a plurality of test case templates 130 to generate test artifacts 134 that include testing to be performed for the workflow 104.

At block 1414, the method 1400 may include applying, by a test artifact applicator 136 that is executed by the at least one hardware processor, the test artifacts 134 to the workflow 104.

At block 1416, the method 1400 may include analyzing, by a workflow modifier 138 that is executed by the at least one hardware processor, the application of the test artifacts 134 to the workflow 104 to determine a compliance of the workflow 104 with a predetermined set of compliance requirements.

According to an example, for the method 1400, analyzing, by the flow analyzer 114, the building block attributes 116 and the graph structure 110 that represents the workflow 104 to generate the building block and attribute information 124 for the workflow 104 may further include analyzing, by the flow analyzer 114, the building block attributes 116 by using test scripts that are specific to a type of the workflow building block of the workflow building blocks 106 and the graph structure 110 that represents the workflow 104 to generate the building block and attribute information 124 for the workflow 104.

According to an example, for the method 1400, analyzing, by the test artifact generator 128, the building block and attribute information 124, the test paths 126, and the plurality of test case templates 130 to generate the test artifacts 134 that include testing to be performed for the workflow 104, may further include using natural language processing to generate the test artifacts 134 in a human readable format.

According to an example, a method for workflow test case generation may include determining an output of a workflow 104, where the output of the workflow 104 may reference a plurality of workflow building blocks 106 that provide a specified functionality at each step of the workflow 104. The method for workflow test case generation may further include generating a graph structure 110 that represents the workflow 104 based on an analysis of workflow definitions of the output of the workflow 104, and analyzing building block attributes 116 and the graph structure 110 that represents the workflow 104 to generate building block and attribute information 124 for the workflow 104, where the building block attributes 116 may include an identification of attributes for the plurality of workflow building blocks 106. The method for workflow test case generation may further include generating test paths 126 for the workflow 104 based on an analysis of the building block and attribute information 124 and the graph structure 110 that represents the workflow 104, where the test paths 126 may represent paths and/or lateral branches of the workflow 104. The method for workflow test case generation may further include generating test artifacts 134 that include testing to be performed for the workflow 104 based on an analysis of the building block and attribute information 124, the test paths 126, and a plurality of test case templates 130. The method for workflow test case generation may further include analyzing an application of the test artifacts 134 to the workflow 104 to determine a compliance of the workflow 104 with a predetermined set of compliance requirements, and modifying the workflow 104 in response to a determination that the workflow 104 is not in compliance with at least one of the predetermined set of compliance requirements.

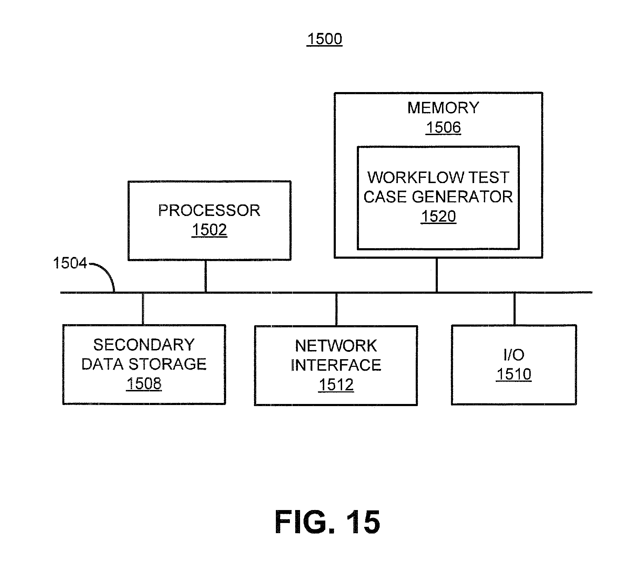

Figure 15 shows a computer system 1500 that may be used with the examples described herein. The computer system may represent a generic platform that includes components that may be in a server or another computer system. The computer system 1500 may be used as a platform for the system 100. The computer system 1500 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 1500 may include a processor 1502 that may implement or execute machine readable instructions performing some or all of the methods, functions and other processes described herein. Commands and data from the processor 1502 may be communicated over a communication bus 1504. The computer system may also include a main memory 1506, such as a random access memory (RAM), where the machine readable instructions and data for the processor 1502 may reside during runtime, and a secondary data storage 1508, which may be non-volatile and stores machine readable instructions and data. The memory and data storage are examples of computer readable mediums. The memory 1506 may include a workflow test case generator 1520 including machine readable instructions residing in the memory 1506 during runtime and executed by the processor 1502. The workflow test case generator 1520 may include the elements of the system 100 shown in Figure 1.

The computer system 1500 may include an I/O device 1510, such as a keyboard, a mouse, a display, etc. The computer system may include a network interface 1512 for connecting to a network. Other known electronic components may be added or substituted in the computer system.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

## Claims

1. A workflow test case generation system comprising:
a flow extractor, executed by at least one hardware processor, to
receive an intermediate output of a workflow, wherein the intermediate output of the workflow references a plurality of workflow building blocks that provide a specified functionality at each step of the workflow, and
analyze workflow definitions of the intermediate output of the workflow to generate a graph structure that represents the workflow;
a flow analyzer, executed by the at least one hardware processor, to
receive building block attributes, wherein the building block attributes include an identification of attributes for the plurality of workflow building blocks,
analyze the building block attributes and the graph structure that represents the workflow to generate building block and attribute information for the workflow, and
analyze the building block and attribute information and the graph structure that represents the workflow to generate test paths for the workflow, wherein the test paths represent at least one of paths and lateral branches of the workflow; and
a test artifact generator, executed by the at least one hardware processor, to
analyze the building block and attribute information, the test paths, and a plurality of test case templates to generate test artifacts that include testing to be performed for the workflow.

2. The workflow test case generation system according to claim 1, wherein the intermediate output of the workflow includes one or more of the following:
an Extensible Markup Language (XML) schema format;
an XML file that represents a single workflow building block of the plurality of workflow building blocks, or the plurality of workflow building blocks.

3. The workflow test case generation system according to claim 1 or 2, wherein a workflow building block of the plurality of workflow building blocks includes one of a service level agreement (SLA), a router, a ticket, an assignment, a utility, and an activity.

4. The workflow test case generation system according to any one of the preceding claims, wherein the test case templates are associated with building blocks or sets of building blocks, and wherein the test case templates define tests that are to be performed for the associated building blocks or the sets of building blocks.

5. The workflow test case generation system according to any one of the preceding claims, wherein the test artifact generator is to analyze the building block and attribute information, the test paths, and a plurality of test case templates to generate test artifacts that include testing to be performed for the workflow by
using the test case templates to extract properties of each workflow building block of the plurality of workflow building blocks, and
applying heuristics to generate the test artifacts.

6. The workflow test case generation system according to any one of the preceding claims, wherein the test artifact generator is to further output the test artifacts in a human readable format;
wherein the human readable format may be an Excel Spreadsheet (XLS) format.

7. The workflow test case generation system according to any one of the preceding claims, further comprising:
a test artifact applicator, executed by the at least one hardware processor, to apply the test artifacts to the workflow; and
a workflow modifier, executed by the at least one hardware processor,
to analyze the application of the test artifacts to the workflow to determine a compliance of the workflow with a predetermined set of compliance requirements, and optionally,
to further modify the workflow in response to a determination that the workflow is not in compliance with at least one of the predetermined set of compliance requirements.

8. The workflow test case generation system according to any one of the preceding claims, wherein the flow extractor is to generate the graph structure that represents the workflow by
identifying start node and end node details from the intermediate output of the workflow; and/or
merging main and sub-flows of the intermediate output of the workflow.

9. A method for workflow test case generation, the method comprising:
receiving, by a flow extractor that is executed by at least one hardware processor, an intermediate output of a workflow, wherein the intermediate output of the workflow references a plurality of workflow building blocks that provide a specified functionality at each step of the workflow;
analyzing, by the flow extractor, workflow definitions of the intermediate output of the workflow to generate a graph structure that represents the workflow;
receiving, by a flow analyzer that is executed by the at least one hardware processor, building block attributes, wherein the building block attributes include an identification of attributes for the plurality of workflow building blocks;
analyzing, by the flow analyzer, the building block attributes and the graph structure that represents the workflow to generate building block and attribute information for the workflow;
analyzing, by the flow analyzer, the building block and attribute information and the graph structure that represents the workflow to generate test paths for the workflow, wherein the test paths represent at least one of paths and lateral branches of the workflow;
analyzing, by a test artifact generator that is executed by the at least one hardware processor, the building block and attribute information, the test paths, and a plurality of test case templates to generate test artifacts that include testing to be performed for the workflow;
applying, by a test artifact applicator that is executed by the at least one hardware processor, the test artifacts to the workflow; and
analyzing, by a workflow modifier that is executed by the at least one hardware processor, the application of the test artifacts to the workflow to determine a compliance of the workflow with a predetermined set of compliance requirements.

10. The method for workflow test case generation according to claim 9, wherein analyzing, by the flow analyzer, the building block attributes and the graph structure that represents the workflow to generate the building block and attribute information for the workflow further comprises:
analyzing, by the flow analyzer, the building block attributes by using test scripts that are specific to a type of the workflow building block of the workflow building blocks and the graph structure that represents the workflow to generate the building block and attribute information for the workflows.

11. The method for workflow test case generation according to claim 9 or 10, wherein analyzing, by the test artifact generator, the building block and attribute information, the test paths, and the plurality of test case templates to generate the test artifacts that include testing to be performed for the workflow, further comprises:
using the test case templates to extract properties of each workflow building block of the plurality of workflow building blocks;
applying heuristics to generate the test artifacts; and optionally
using natural language processing to generate the test artifacts in a human readable format.

12. The method for workflow test case generation according to any one of claims 9 to 11, further comprising:
modifying, by the workflow modifier, the workflow in response to a determination that the workflow is not in compliance with at least one of the predetermined set of compliance requirements.

13. A non-transitory computer readable medium having stored thereon machine readable instructions for workflow test case generation, the machine readable instructions when executed cause at least one hardware processor to:
determine an output of a workflow, wherein the output of the workflow references a plurality of workflow building blocks that provide a specified functionality at each step of the workflow;
generate a graph structure that represents the workflow based on an analysis of workflow definitions of the output of the workflow;
analyze building block attributes and the graph structure that represents the workflow to generate building block and attribute information for the workflow, wherein the building block attributes include an identification of attributes for the plurality of workflow building blocks;
generate test paths for the workflow based on an analysis of the building block and attribute information and the graph structure that represents the workflow, wherein the test paths represent at least one of paths and lateral branches of the workflow;
generate test artifacts that include testing to be performed for the workflow based on an analysis of the building block and attribute information, the test paths, and a plurality of test case templates;
analyze an application of the test artifacts to the workflow to determine a compliance of the workflow with a predetermined set of compliance requirements; and
modify the workflow in response to a determination that the workflow is not in compliance with at least one of the predetermined set of compliance requirements.

14. The non-transitory computer readable medium according to claim 13, wherein the output of the workflow includes an Extensible Markup Language (XML) schema format.

15. The non-transitory computer readable medium according to claim 13 or 14, wherein the machine readable instructions to generate the graph structure that represents the workflow based on the analysis of workflow definitions of the output of the workflow further comprise machine readable instructions to:
generate the graph structure that represents the workflow by identifying start node and end node details from the output of the workflow.
